# EUROPEAN PATENT APPLICATION

(11) **EP 4 825 894 A1**
(43) Date of publication of application: **21.10.2026**
(21) Application number: 25768565.1
(22) Date of filing: 04.03.2025
(51) Int. Cl.: C08G 65/48, C08G 65/46

(54) **METHOD FOR PREPARING CAPPED POLY(PHENYLENE OXIDE)**

(30) Priority: 04.03.2024 KR 20240030932
(71) Applicant: Kolon Industries, Inc., Seoul 07793 (KR)
(72) Inventor: NOH, Taehwan, Incheon 22715 (KR); KIM, Minkyung, Seoul 07792 (KR); SHIN, Younggyun, Seoul 04139 (KR); LEE, Changjae, Hwaseong-si, Gyeonggi-do 18591 (KR); PARK, Sunpil, Seoul 07365 (KR); CHANG, Wontae, Incheon 21324 (KR)
(74) Representative: Vossius & Partner Patentanwälte Rechtsanwälte mbB
(86) International application number: PCT/KR2025/002866
(87) International publication number: WO 2025/188041

(57) **Abstract**

The present disclosure relates to a method for preparing capped poly(phenylene oxide), and more particularly, to a method for preparing capped poly(phenylene oxide), the method capable of improving filterability of the capped poly(phenylene oxide) while reducing co-precipitated impurities, and providing a low level of polar impurities.

## Description

### Technical Field

The present application claims priority to Korean Patent Application No. 10-2024-0030932, filed on March 4, 2024, with the Ministry of Intellectual Property, Republic of Korea, the disclosure of which is incorporated herein by reference.

The present disclosure relates to a method for preparing capped poly(phenylene oxide), and more particularly, to a method for preparing capped poly(phenylene oxide), the method including a plurality of crystallization processes after reacting uncapped poly(phenylene oxide) with an anhydride capping agent.

### Background Art

Poly(phenylene oxide) (poly(phenylene ether)) polymers are resins having excellent water resistance and dimensional stability, a wide temperature range, and excellent dielectric properties, and are used in various products such as mechanical components, insulation layers, electronic products, and vehicle components by using various cross-linking agents and through copolymerization. In particular, as a telechelic polymer having reactive end groups, capped poly(phenylene oxide) prepared by capping functional groups capable of curing at terminals may be used in the manufacture of electronic devices due to lower hygroscopicity and improved physical properties through curing.

According to KR10-0832928, moisture may cause damage during the manufacture of electronic devices, and such moisture has been confirmed to increase as the amount of polar impurities in a polymer composition increases. The polar impurities may be derived from a catalyst remaining in a process of preparing using a capping agent, reaction by-products, or reaction reagents, and the residual amount may vary depending on a preparation method. Previously known methods for preparing capped poly(phenylene oxide) include a method using an anhydride capping agent and an amine catalyst, and since the anhydride capping agent is hydrolyzed to form an organic acid, impurities having higher polarity than the amine catalyst or the capping agent are generated.

As a previously known purification method, according to KR10-0832928, an organic solvent including capped poly(phenylene oxide) is crystallized with an anti-solvent (alkanol) to separate an organic amine, an anhydride capping agent, and reaction by-products, thereby preparing a composition in which the organic amine catalyst is included in an amount of 1,000 ppm or less and the organic acid is included in an amount of 10,000 ppm or less.

Additionally, as another previously known purification method, according to US7595367, polar impurities are extracted and purified from an organic solvent including capped poly(phenylene oxide) using a basic aqueous solution and an acidic aqueous solution, thereby preparing a composition in which the organic amine catalyst is included in an amount of 1,000 ppm or less and acrylic acid is included in an amount of 2,500 ppm or less.

In the crystallization method described in KR10-0832928, since a small amount of the anhydride capping agent remains, the anhydride capping agent may be hydrolyzed by moisture that may be introduced in a subsequent process, thereby increasing the organic acid and resulting in an increase in polar impurities. In addition, although the organic amine catalyst may be controlled to 1,000 ppm or less by the crystallization method, the organic acid, which is a reaction by-product having the highest polarity, is controlled to 10,000 ppm or less and thus a significant amount remains. Furthermore, toluene used as a reaction solvent is an environmentally regulated substance and has a problem in that it is not environmentally friendly.

In addition, in the washing method described in US7595367, although the organic amine catalyst and the organic acid may be controlled to 1,000 ppm or less and 2,500 ppm or less, respectively, there are conditions in which phase separation is not well achieved due to an emulsion depending on purification conditions, and there is a disadvantage in that a large amount of wastewater is generated because washing is performed multiple times to control impurities to be below reference values. Furthermore, the presence of ions that may remain due to the use of an inorganic acid or an inorganic base may affect post-processing or physical properties of a final product.

### Prior Art Documents

### Patent Documents

(Patent Document 0001) KR10-0832928
(Patent Document 0002) US7595367

### Disclosure of Invention

### Technical Problem

Accordingly, a technical problem to be solved by the present disclosure is to provide a method for preparing capped poly(phenylene oxide) that does not generate a large amount of wastewater, is environmentally friendly by excluding BTX (benzene, toluene, xylene) which are environmentally regulated substances, does not include an anhydride in a product so that impurities do not increase during post-processing and storage, and has a low level of polar impurities.

Furthermore, it is to provide a method for preparing capped poly(phenylene oxide), the method having improved filterability while reducing co-precipitated impurities by including two crystallization processes.

Additionally, a technical problem to be solved by the present disclosure is to provide a thermosetting composition including capped poly(phenylene oxide) prepared according to the above-described method for preparing capped poly(phenylene oxide) and an olefin-based unsaturated monomer.

The problems to be solved by the present disclosure are not limited to the above-mentioned problems, and other problems not mentioned will be clearly understood by a person of ordinary skill in the art from the following description.

### Solution to Problem

According to an aspect of the present disclosure, there is provided a method for preparing capped poly(phenylene oxide), the method including: (S10) preparing a first reactant by introducing poly(phenylene oxide) and a catalyst into a first solvent and dissolving the poly(phenylene oxide) in the first solvent; (S20) heating a second reactant, in which an anhydride capping agent is introduced into the first reactant, to a boiling point, followed by stirring at a reflux temperature; (S30) introducing a viscosity reducing agent into a result of process (S20), followed by stirring; (S40) adding dropwise the result of process (S30) into a second solvent while stirring for first crystallization; and (S50) adding dropwise a third solvent into the result of process (S40) while stirring for second crystallization.

Here, the capped poly(phenylene oxide) may represent a structure of Formula 1.

[Formula 1] Y(B-A)ₓ

(wherein in Formula 1, Y is a residue of a monovalent, divalent, or polyvalent phenol;
B includes a repeating unit of Formula 2;
A is a capping group prepared by a reaction of the anhydride capping agent with a free phenolic hydroxyl group on the poly(phenylene oxide);
x is 1 to 100.) 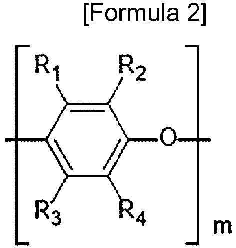
(wherein in Formula 2, m is 1 to 200;
R₁ and R₃ are each independently selected from the group consisting of hydrogen, halogen, primary or secondary C1-C12 alkyl, C2-C12 alkenyl, C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom);
R₂ and R₄ are each independently selected from the group consisting of halogen, primary or secondary C1-C12 alkyl, C2-C12 alkenyl, C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom.)

Here, A may represent a structure of any one of Formula 3 to Formula 5. 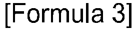 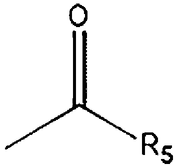
(wherein in Formula 3, R₅ is C1-C12 hydrocarbyl optionally substituted with one or two carboxylic acid groups.) 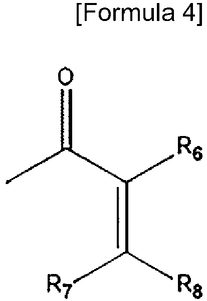
(wherein in Formula 4, R₆ to R₈ are each independently selected from the group consisting of hydrogen, C1-C18 hydrocarbyl optionally substituted with one or two carboxylic acid groups, C2-C18 hydrocarbyloxycarbonyl, nitrile, formyl, carboxylic acid, imidate, and thiocarboxylic acid.) 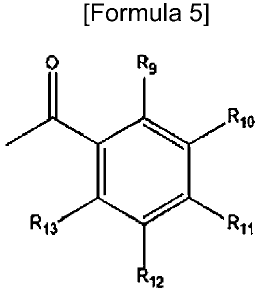
(wherein in Formula 5, R₉ to R₁₃ are each independently selected from the group consisting of hydrogen, halogen, C1-C12 alkyl, hydroxy, amino, and carboxylic acid.)

Additionally, Y may represent a structure of Formula 6. 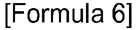 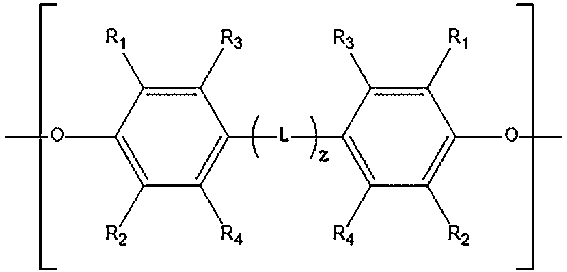
(wherein in Formula 6, L represents a structure of any one of Formula 7 to Formula 13;
z may be 0 or 1;
R₁ to R₄ are each independently selected from the group consisting of hydrogen, halogen, and substituted C1-C12 hydrocarbyl.)

   [Formula 7] -O- 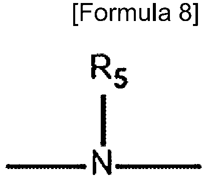
(wherein in Formula 8, R₅ is selected from the group consisting of hydrogen and C1-C12 hydrocarbyl.) 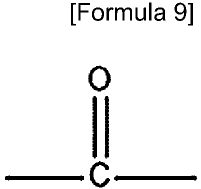 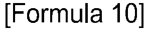 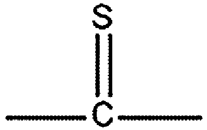 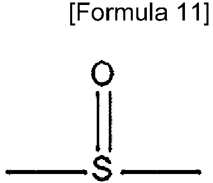 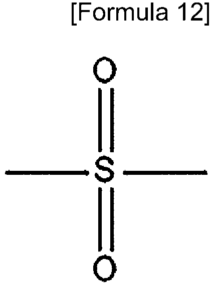 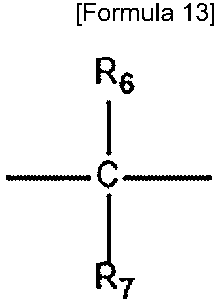
(wherein in Formula 13, R₆ and R₇ are each independently selected from the group consisting of hydrogen, C1-C12 hydrocarbyl, and C1-C6 hydrocarbylene.)

Additionally, the first solvent may be an aprotic solvent.

In this case, the aprotic solvent may include any one selected from the group consisting of ethyl acetate, propylene glycol methyl ether acetate, methyl ethyl ketone, methyl isobutyl ketone, and benzyl phenyl ketone, or a mixture of two or more thereof.

In addition, the anhydride capping agent may represent a structure of Formula 14. 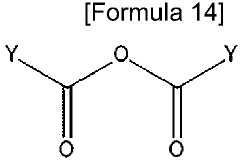
(wherein in Formula 14, Y each independently represents a structure of any one of Formula 15 to Formula 17.)

   [Formula 15] -R₅
(wherein in Formula 15, R₅ is C1-C12 hydrocarbyl optionally substituted with one or two carboxylic acid groups.) 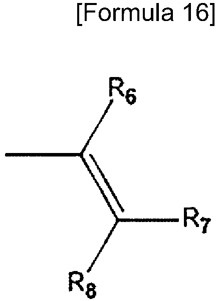
(wherein in Formula 16, R₆ to R₈ are each independently selected from the group consisting of hydrogen, C1-C18 hydrocarbyl optionally substituted with one or two carboxylic acid groups, C2-C18 hydrocarbyloxycarbonyl, nitrile, formyl, carboxylic acid, imidate, and thiocarboxylic acid.) 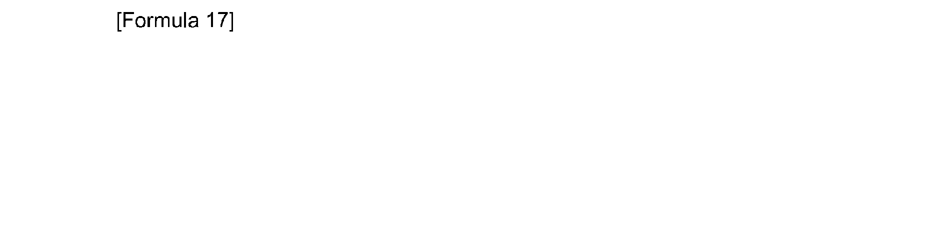 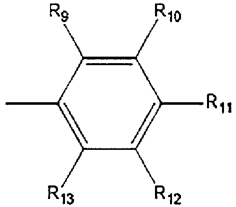
(wherein in Formula 17, R₉ to R₁₃ are each independently selected from the group consisting of hydrogen, halogen, C1-C12 alkyl, hydroxy, amino, and carboxylic acid.)

Additionally, the anhydride capping agent may include any one selected from the group consisting of acetic anhydride, succinic anhydride, maleic anhydride, salicylic anhydride, phthalic anhydride, acrylic anhydride, and methacrylic anhydride, or a mixture of two or more thereof.

Additionally, an amount of the anhydride capping agent may be 10 to 50 parts by weight based on 100 parts by weight of the poly(phenylene oxide).

Meanwhile, the viscosity reducing agent may include any one selected from the group consisting of C1-C4 alkanol, or a mixture of two or more thereof.

Additionally, an amount of the viscosity reducing agent may be 1 to 30 parts by weight based on 100 parts by weight of the poly(phenylene oxide).

In addition, the second solvent and the third solvent may each independently include any one selected from the group consisting of C1-C4 alkanol, or a mixture of two or more thereof.

Additionally, an amount of the second solvent and the third solvent may each independently be 200 to 400 parts by weight based on 100 parts by weight of the poly(phenylene oxide).

Meanwhile, the method for preparing capped poly(phenylene oxide) according to the present disclosure may further include, after process (S50), (S60) filtering the result of process (S50) to obtain a solid product and then washing the solid product with a washing liquid.

Here, the washing liquid may include alkanol and water.

Here, the washing liquid may include 1 to 30 parts by weight of the water based on 100 parts by weight of the alkanol.

Additionally, the method may further include, after process (S60), (S70) drying the solid product at a temperature of 80 to 100 °C to remove a residual solvent.

### Advantageous Effects of Invention

According to an embodiment of the present disclosure, by including two crystallization processes, the method may improve filterability of capped poly(phenylene oxide) while reducing co-precipitated impurities.

In addition, it is possible to obtain capped poly(phenylene oxide) that does not generate a large amount of wastewater during a preparation process, is environmentally friendly by excluding benzene, toluene, xylene (BTX) which are environmentally regulated substances, does not include an anhydride in a product so that impurities do not increase during post-processing and storage, and has a low level of polar impurities.

Meanwhile, the effects of the present disclosure are not limited to the above-described effects, and it should be understood that all effects that may be inferred from the configuration of the disclosure described in the detailed description of the present disclosure or the claims are included.

### Mode for the Invention

Hereinafter, embodiments of the present disclosure will be described in detail so that a person of ordinary skill in the art to which the present disclosure pertains may easily carry out the present disclosure.

The embodiments of the present disclosure described below are provided to more clearly explain the present disclosure to a person of ordinary skill in the art, and the scope of the present disclosure is not limited by the following embodiments, and the following embodiments may be modified in various other forms.

Terms used herein are used to describe specific embodiments and are not intended to limit the present disclosure. As used herein, a singular form may include a plural form unless the context clearly indicates otherwise. Additionally, the terms "comprise" and/or "comprising" as used herein specify the presence of stated shapes, processes, numbers, operations, members, elements, and/or groups thereof, and do not preclude the presence or addition of one or more other shapes, processes, numbers, operations, members, elements, and/or groups thereof. In addition, the term "connection" as used herein includes not only a case in which certain members are directly connected, but also a case in which the members are indirectly connected with another member disposed therebetween.

In addition, when a member is positioned "on" another member in this specification, this includes not only a case in which the member is in contact with another member but also a case in which another member exists between the two members. The term "and/or" as used herein includes any one and all combinations of one or more of the listed items. Additionally, terms indicating degree such as "about" and "substantially" as used herein are used in the sense of the corresponding numerical values or ranges thereof or values close thereto in consideration of inherent manufacturing and material tolerances, and are used to prevent an infringer from unduly exploiting disclosed contents in which exact or absolute numerical values are provided to aid understanding of the present disclosure.

A method for preparing capped poly(phenylene oxide) according to an aspect of the present disclosure includes (S10) preparing a first reactant by introducing poly(phenylene oxide) and a catalyst into a first solvent and dissolving the poly(phenylene oxide) in the first solvent; (S20) raising a second reactant, in which an anhydride capping agent is introduced into the first reactant, to a boiling point, followed by stirring at a reflux temperature; (S30) introducing a viscosity reducing agent into a result of process (S20), followed by stirring; (S40) adding dropwise the result of process (S30) into a second solvent while stirring for first crystallization; and (S50) adding dropwise a third solvent into the result of process (S40) while stirring for second crystallization.

As in an embodiment of the present disclosure, when two crystallization processes are included, impurities that may be co-precipitated may be reduced, and there is an advantage in that filterability of capped poly(phenylene oxide) may be improved.

The capped poly(phenylene oxide) according to the present disclosure may represent a structure of the following Formula 1.

[Formula 1] Y(B-A)ₓ

In Formula 1, Y may be a residue of a monovalent, divalent, or polyvalent phenol;
B may include a repeating unit of the following Formula 2;
A may be a capping group prepared by a reaction of the anhydride capping agent with a free phenolic hydroxyl group on the poly(phenylene oxide);
x may be 1 to 100.

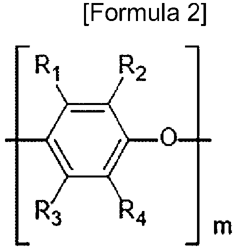

In Formula 2, m may be 1 to about 200, specifically 2 to about 200;
R₁ and R₃ may each independently be selected from the group consisting of hydrogen, halogen, primary or secondary C1-C12 alkyl, C2-C12 alkenyl, C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom or another atom);
R₂ and R₄ may each independently be selected from the group consisting of halogen, primary or secondary C1-C12 alkyl, C2-C12 alkenyl, C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom or another atom).

Here, A in Formula 1 may represent a structure of any one of the following Formula 3 to Formula 5.

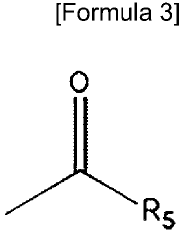

In Formula 3, R₅ may be C1-C12 hydrocarbyl optionally substituted with one or two carboxylic acid groups.

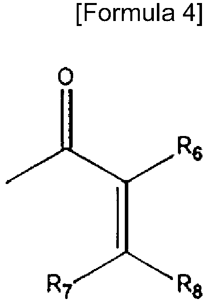

In Formula 4, R₆ to R₈ may each independently be selected from the group consisting of hydrogen, C1-C18 hydrocarbyl optionally substituted with one or two carboxylic acid groups, C2-C18 hydrocarbyloxycarbonyl, nitrile, formyl, carboxylic acid, imidate, and thiocarboxylic acid.

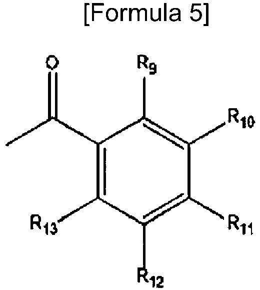

**In** Formula 5, R₉ to R₁₃ may each independently be selected from the group consisting of hydrogen, halogen, C1-C12 alkyl, hydroxy, amino, and carboxylic acid.

Additionally, Y in Formula 1 may represent a structure of the following Formula 6.

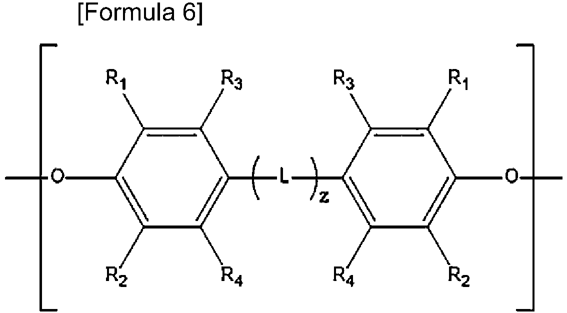

In Formula 6, L may represent a structure of any one of the following Formula 7 to Formula 13;
z may be 0 or 1;
R₁ to R₄ may each independently be selected from the group consisting of hydrogen, halogen, and substituted C1-C12 hydrocarbyl.

   [Formula 7] -O-

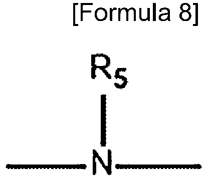

In Formula 8, R₅ may be selected from the group consisting of hydrogen and C1-C12 hydrocarbyl.

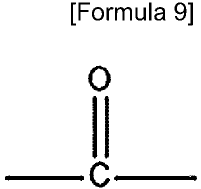

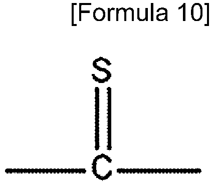

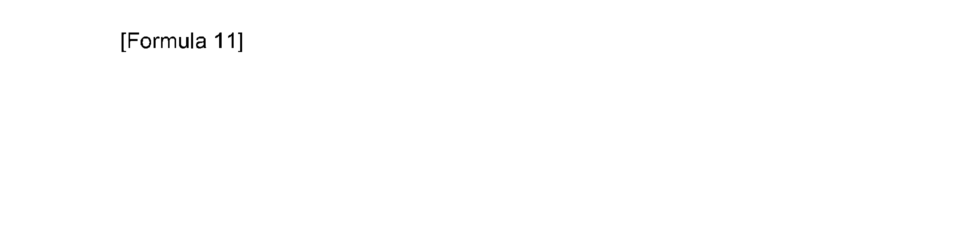

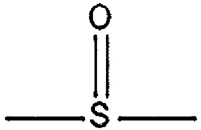

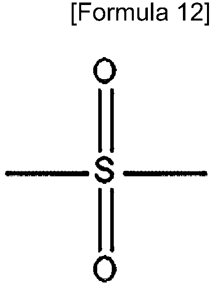

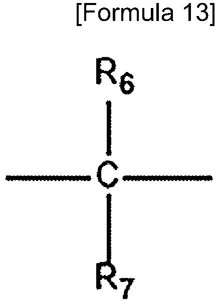

In Formula 13, R₆ and R₇ may each independently be selected from the group consisting of hydrogen, C1-C12 hydrocarbyl, and C1-C6 hydrocarbylene.

The term "hydrocarbyl" as used herein refers to a residue containing only carbon and hydrogen. The residue may be aliphatic or aromatic, straight-chained, cyclic, bicyclic, branched, saturated, or unsaturated. However, when described as above, the hydrocarbyl residue may contain a hetero atom on carbon and hydrogen members of a substituent residue. Accordingly, when specifically indicated as containing such a hetero atom, the hydrocarbyl residue may further contain a carbonyl group, an amino group, a hydroxyl group, a halogen atom, or the like, or may contain a hetero atom within a main chain of the hydrocarbyl residue.

As the catalyst used in process (S10), compounds known in the art for a condensation reaction of anhydride and phenol may be included. Although not limited thereto, useful materials may include basic compounds including hydroxide salts, for example sodium hydroxide, potassium hydroxide, tetraalkylammonium hydroxide, and the like; tertiary alkylamines, for example tributylamine, triethylamine, dimethylbenzylamine, dimethylbutylamine; tertiary mixed alkyl-arylamines and substituted derivatives thereof, for example N,N-dimethylaniline; heterocyclic amines, for example imidazole, pyridine, and substituted derivatives thereof, for example 2-methylimidazole, 2-vinylimidazole, 4-dimethylaminopyridine, 4-(1-pyrrolino)pyridine, 4-(1-pyrrolino)pyridine, 4-(1-piperidino)pyridine, 2-vinylpyridine, 3-vinylpyridine, and 4-vinylpyridine.

More specifically, 4-dimethylaminopyridine (DMAP) may be used. An amount of the catalyst may be 0.1 to 10 parts by weight based on 100 parts by weight of poly(phenylene oxide), specifically 1 to 8 parts by weight, more specifically 2 to 7 parts by weight, but is not limited thereto.

Additionally, the first solvent used as a reaction solvent in the capping reaction of the present disclosure may be an aprotic solvent, and examples thereof may include any one selected from the group consisting of ethyl acetate, propylene glycol methyl ether acetate, methyl ethyl ketone, methyl isobutyl ketone, and benzyl phenyl ketone, or a mixture of two or more thereof, but is not limited thereto.

More specifically, ethyl acetate may be used. An amount of the ethyl acetate may be 100 to 400 parts by weight based on 100 parts by weight of poly(phenylene oxide), specifically 150 to 350 parts by weight, more specifically 200 to 300 parts by weight, but is not limited thereto.

The anhydride capping agent used in process (S20) may represent a structure of the following Formula 14.

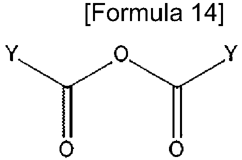

In Formula 14, Y may each independently have a structure represented by any one of the following Formula 15 to Formula 17.

[Formula 15] -R₅

In Formula 15, R₅ may be C1-C12 hydrocarbyl optionally substituted with one or two carboxylic acid groups.

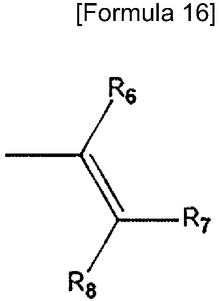

In Formula 16, R₆ to R₈ may each independently be selected from the group consisting of hydrogen, C1-C18 hydrocarbyl optionally substituted with one or two carboxylic acid groups, C2-C18 hydrocarbyloxycarbonyl, nitrile, formyl, carboxylic acid, imidate, and thiocarboxylic acid.

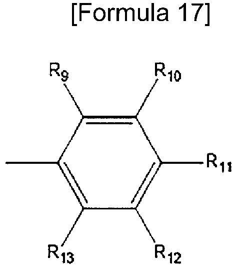

In Formula 17, R₉ to R₁₃ may each independently be selected from the group consisting of hydrogen, halogen, C1-C12 alkyl, hydroxy, amino, and carboxylic acid.

Specific examples of the anhydride capping agent may include any one selected from the group consisting of acetic anhydride, succinic anhydride, maleic anhydride, salicylic anhydride, phthalic anhydride, acrylic anhydride, and methacrylic anhydride, or a mixture of two or more thereof.

The anhydride capping agent may further be understood to include a dicarboxylic acid capable of forming a corresponding cyclic anhydride under capping reaction conditions. Such dicarboxylic acid may include, for example, maleic acid, malic acid, citraconic acid, itaconic acid, phthalic acid, and the like.

More specifically, methacrylic anhydride may be used. An amount of the anhydride capping agent may be 10 to 50 parts by weight based on 100 parts by weight of poly(phenylene oxide), specifically 15 to 40 parts by weight, more specifically 20 to 35 parts by weight, but is not limited thereto. When it is less than 20 parts by weight, a conversion rate may be insufficient and physical properties may be changed, and when it exceeds 35 parts by weight, by-products may also increase due to use of an excessive amount of raw material, which is not preferable.

Additionally, in process (S20), the second reactant may be raised to a boiling point and then stirred at a reflux temperature for 1 to 20 hours, 2 to 18 hours, 3 to 16 hours, or 5 to 15 hours, but is not limited thereto.

After process (S20) (that is, the capping reaction process), due to by-products generated by the anhydride capping agent and the catalyst, the reaction mixture becomes somewhat suspended and a phenomenon in which viscosity increases occurs. In mixtures having increased viscosity, crystallization does not proceed smoothly during crystallization, leading to the co-precipitation of polar impurities within. Since co-precipitated particles are not easily removed even by washing, it is important to relieve the viscosity of the reaction mixture. Methods for reducing the viscosity of the reaction mixture include a method of increasing a temperature of the reaction mixture and a method of introducing a viscosity reducing agent. Increasing the temperature in a production site requires a large amount of energy and process time, which results in reduced process efficiency. Therefore, it is more preferable to use a viscosity reducing agent.

The substance used as the viscosity reducing agent may include any one selected from the group consisting of C1-C4 alkanol, or a mixture of two or more thereof.

The C1-C4 alkanol may be methanol, ethanol, n-propanol, isopropanol, n-butanol, sec-butanol, tert-butanol, ethylene glycol, propylene glycol, 1,4-butanediol, glycerol, or a combination thereof.

More specifically, methanol may be used. An amount of the viscosity reducing agent may be 1 to 30 parts by weight based on 100 parts by weight of the poly(phenylene oxide), specifically 5 to 25 parts by weight, more specifically 10 to 25 parts by weight, but is not limited thereto.

Additionally, an additional advantage obtainable by using the viscosity reducing agent immediately after the capping reaction is that an unreacted anhydride capping agent may be removed. The anhydride capping agent remaining after the capping reaction undergoes alcoholysis by the alkanol and is mostly removed so as not to remain in a product after crystallization. According to prior arts, crystallization is mostly carried out at a temperature lower than room temperature, and in an alcohol having a high molecular weight such as isopropanol, it takes a long time for the anhydride capping agent to be decomposed, resulting in residue. Accordingly, using the viscosity reducing agent at a high temperature immediately after the capping reaction has an advantage in that the anhydride capping agent may be decomposed within a short time.

Specifically, a temperature at which the viscosity reducing agent is introduced may be 30 to 80 °C, specifically 40 to 70 °C, more specifically 50 to 60 °C, but is not limited thereto.

Meanwhile, according to an embodiment of the present disclosure, the method is characterized by including two crystallization processes, thereby reducing co-precipitated impurities and improving filterability of capped poly(phenylene oxide).

With respect to the first and second crystallization process (that is, process (S40) and process (S50)), the first crystallization is carried out by adding dropwise a reaction mixture including capped poly(phenylene oxide) into a second solvent while stirring. Additionally, the second crystallization is carried out by adding dropwise a third solvent into a result of the first crystallization process while stirring.

In this case, the second solvent and the third solvent may each independently include any one selected from the group consisting of C1-C4 alkanol, or a mixture of two or more thereof. The second solvent and the third solvent may specifically be methanol.

Additionally, an amount of the second solvent and the third solvent may each independently be 200 to 500 parts by weight based on 100 parts by weight of the poly(phenylene oxide), specifically 300 to 400 parts by weight, more specifically about 350 parts by weight, but is not limited thereto.

The first crystallization process should be performed at a low temperature, and when the temperature is high, capped poly(phenylene oxide) crystals may aggregate with each other. Specifically, the first crystallization process may be performed by cooling the result of process (S30) to room temperature and then adding dropwise the same into a second solvent having a temperature of -20 to 20 °C, more specifically -5 to 15 °C, while stirring.

Additionally, the second crystallization process should also be performed at a low temperature, and specifically, the second crystallization process may be performed by adding dropwise a third solvent into the result of process (S40) having a temperature of - 20 to 20 °C, more specifically -5 to 15 °C, while stirring.

When the crystallization processes are completed, capped poly(phenylene oxide) crystals may be filtered using a filter or the like, and a solid product in a form of a wet cake may be obtained. A type of the filter is not particularly limited, and a Nutsche filter, a filter press, a filter and dryer, a centrifuge, and the like may be used.

When the crystallization processes (that is, process (S40) and process (S50)) are completed, the method may further include (S60) filtering a result of the crystallization processes to obtain a solid product and then washing the solid product with a washing liquid. Such washing operation may use a washing liquid including alkanol and water used as an anti-solvent.

Although there is no difference in washing effect compared to anhydrous alcohol, by increasing polarity of the washing liquid, a decrease in yield during washing may be prevented. More specifically, since capped poly(phenylene oxide) is not a monomer having a single molecular weight but an oligomer or polymer, there exists a molecular weight distribution range that may be dissolved in alkanol. In addition, immediately after filtration, since a reaction solvent having high solubility is included in a wet cake in a small amount, solubility tends to increase. When anhydrous alkanol is used, a region having a low molecular weight is dissolved and washed away, resulting in a change in physical properties of a product and a decrease in yield. Accordingly, to increase polarity of the washing solvent, it is preferable to use a mixed solution of water and alkanol.

The washing liquid may include 1 to 30 parts by weight of the water based on 100 parts by weight of the alkanol, specifically 1 to 20 parts by weight, more specifically 1 to 10 parts by weight, but is not limited thereto. Here, the alkanol may specifically be methanol.

Meanwhile, according to the present disclosure, the method may further include, after process (S60), (S70) drying the solid product at a temperature of 80 to 100 °C to remove a residual solvent.

After filtration and washing of capped poly(phenylene oxide) are completed, drying may be performed to remove a residual solvent. A drying method is not particularly limited, but vacuum drying is preferable for drying efficiency, and a ribbon dryer, a filter and dryer, a tray dryer, and the like may be used. Specifically, when a ribbon dryer is used, drying may be performed at a temperature of 50 to 100 °C, and when a drying temperature is lower than the above range, drying efficiency is reduced and a long time may be required, which is not preferable.

A product obtained after completion of the drying process is a resin in a solid-state, and finally, capped poly(phenylene oxide) having a low level of polar impurities may be prepared.

Hereinafter, examples will be described in detail to specifically describe the present disclosure. However, examples according to the present disclosure may be modified in various other forms, and the scope of the present disclosure should not be construed as being limited to the examples described below. The examples of the present disclosure are provided to more fully explain the present disclosure to a person of ordinary skill in the art.

### 1. Preparation of capped poly(phenylene oxide)

### (1) Example 1

100 g of uncapped poly(phenylene oxide) (hereinafter, PPO-2OH), 5 g of 4-dimethylaminopyridine (hereinafter, DMAP), and 250 g of ethyl acetate (hereinafter, EA) as a first solvent were introduced into a reactor equipped with a cooling reflux condenser and a stirrer, and then stirred.

After 30 minutes, after the PPO-2OH was dissolved, 30 g of methacrylic anhydride (hereinafter, MAAH) was introduced and the temperature was raised to a boiling point.

After reacting for 10 hours at a reflux temperature, the reaction was terminated. After termination of the reaction, an internal temperature was cooled to 50 to 60 °C, and 20 g of methanol (MeOH) was introduced as a viscosity reducing agent. A small amount of crystals splashed but soon dissolved, and the mixture was stirred for 1 hour.

After cooling the reaction solution again to room temperature, the reaction solution was inversely dropwise added into 300 g of methanol as a second solvent of a second reactor to perform first crystallization. The first crystallization was carried out at 5 °C, the stirring was performed for 1 hour, and then 300 g of methanol as a third solvent was added dropwise into a result of the first crystallization to perform second crystallization. The second crystallization was carried out at 5 °C, and the stirring was performed for 1 hour.

After completion of the crystallization, a result of the second crystallization was filtered with a glass filter, and after sufficiently removing the filtrate, washing was performed with a washing liquid of a 95 wt% methanol aqueous solution mixed with water. The washed capped poly(phenylene oxide) resin was subjected to vacuum drying at 90 °C for 12 hours, and finally, a capped poly(phenylene oxide) resin was obtained.

### (2) Example 2

A capped poly(phenylene oxide) resin was obtained in the same manner as in Example 1, except that anhydrous methanol was used instead of a mixed solution of water and methanol as a washing liquid.

### (3) Comparative Example 1

A capped poly(phenylene oxide) resin was obtained in the same manner as in Example 1, except that methanol as a viscosity reducing agent was not introduced.

### (4) Comparative Example 2

A capped poly(phenylene oxide) resin was obtained in the same manner as in Example 1, except that crystallization was performed using 600 g of a second solvent and that second crystallization using a third solvent was omitted.

### (5) Comparative Example 3

A capped poly(phenylene oxide) resin was obtained in the same manner as in Example 1, except that washing was not performed.

### (6) Comparative Example 4

100 g of PPO-2OH, 5 g of DMAP, and 100 g of toluene as a first solvent were introduced into a reactor equipped with a cooling reflux condenser and a stirrer, and then stirred. After 30 minutes, after the PPO-2OH was dissolved, 30 g of MAAH was introduced and the temperature was raised to a boiling point.

After reacting for 10 hours at a reflux temperature, the reaction was terminated. After termination of the reaction, washing was performed at 50 to 60 °C using 50 g of a 5 wt% aqueous NaOH solution, and a lower aqueous layer was discarded through phase separation. The upper organic layer was washed again using 50 g of an acidic aqueous solution (5 wt% acetic acid) and subjected to phase separation.

After cooling the organic layer again to room temperature, the organic layer was inversely dropwise added into 600 g of methanol in a second reactor to perform crystallization. The crystallization was carried out at 5 °C, and the stirring was performed for 1 hour, and after completion of crystallization, a result of the crystallization was filtered with a glass filter, and after sufficiently removing a filtrate, washing was performed with a washing liquid of a 95 wt% methanol aqueous solution mixed with water. The washed capped poly(phenylene oxide) resin was subjected to vacuum drying at 90 °C for 12 hours, and finally, a capped poly(phenylene oxide) resin was obtained.

### (7) Comparative Example 5

A capped poly(phenylene oxide) resin was obtained in the same manner as in Comparative Example 4, except that washing and phase separation were performed using a basic or acidic aqueous solution, and that isopropanol (hereinafter, IPA) was used instead of methanol as a solvent (anti-solvent) in a second reactor.

### 2. Evaluation of physical properties of capped poly(phenylene oxide)

### (1) Measurement of weight average molecular weight (Mw)

Using a Shimadzu GPC LC-40D/RID-20A equipment, molecular weight was measured after performing molecular weight calibration through a standard method after setting Agilent PLgel 5 µm 1,000 Å + 500 Å + 100 Å.

### (2) Measurement of impurity content

Using an Agilent HPLC 1260 series equipment, after setting an Atlantis dC18 column (4.6 x 150 mm, 5 µm), impurities in capped poly(phenylene oxide) (Modified PPO, MPPO) were quantitatively analyzed using methacrylic acid (MAA) and 4-dimethylaminopyridine (DMAP) standards.

### (3) Measurement of gel-time

0.3 g of a resin composition sample was placed on a hot plate at about 191 °C, and a time required until the sample was not attached to a stirring rod used for stirring the sample or until the sample was cured was measured.

### (4) Adhesion test (peeling test)

A force required to vertically peel a copper foil having a width of 1 cm from a laminate was measured.

### (5) Curing behavior and phase separation behavior

Curing behavior: powder obtained from a prepreg was measured using a TA rheometer, and a temperature increase rate was 3 °C/min, and a change in viscosity according to curing was observed in a temperature range of 60 °C to 160 °C.

Phase separation behavior: when about 1 L of an organic solution and an aqueous solution were stirred at RPM 200 or more for 30 minutes and then allowed to stand, a degree of phase separation was confirmed by naked eye and time. When an organic phase and an aqueous phase were clearly separated within 10 minutes, a degree of phase separation may be evaluated as good. When phase separation at an interface is not good even after 10 minutes or more has sufficiently elapsed, or when the organic phase or the aqueous phase is hazy, a degree of phase separation may be evaluated as poor.

**[Table 1]**

| | Example 1 | Example 2 |
|---|---|---|
| Yield (%) | 91 | 88 |
| Mw (AMU) | 4,214 | 4,391 |
| Methacrylic anhydride (ppm) | ND | ND |
| Methacrylic acid (ppm) | 1,012 | 1,130 |
| DMAP (ppm) | 212 | 208 |
| Gel-time (sec) | 96.5 | 105.4 |
| Peeling test (lb/in) | 3.40 | 3.37 |
| curing behavior | well cured | well cured |
| phase separation behavior | not applicable | not applicable |

**[Table 2]**

| | Comparative Example 1 | Comparative Example 2 | Comparative Example 3 | Comparative Example 4 | Comparative Example 5 |
|---|---|---|---|---|---|
| Yield (%) | 91 | 90 | 91 | 71 | 86 |
| Mw (AMU) | 4,242 | 4,198 | 4,139 | 4,322 | 4,268 |
| Methacrylic anhydride (ppm) | (24)* | ND | ND | ND | 192 |
| Methacrylic acid (ppm) | 2,437 | 2,844 | 7,972 | 4,308 | 5,322 |
| DMAP (ppm) | 655 | 854 | 1,731 | 1,816 | 931 |
| Gel-time (sec) | 98.1 | 97.7 | 95.3 | - | 96.9 |
| Peeling test (lb/in) | 3.25 | 3.29 | 2.71 | - | 2.91 |
| curing behavior | well cured | well cured | different behavior | - | different behavior |
| phase separation behavior | not applicable | not applicable | not applicable | Organic phase emulsified | not applicable |

| | | | | | |
|---|---|---|---|---|---|
| *based on wet cake | | | | | |

Referring to Table 1 and Table 2, the resin prepared according to Example 1 showed that methacrylic anhydride was not detected, and methacrylic acid was prepared to be 1,500 ppm or less. In particular, in the case of DMAP, it was detected at 500 ppm or less, confirming that a significant amount was removed. Additionally, the resin prepared according to Example 2 showed that polar impurities were removed similarly to Example 1, but yield was somewhat reduced. This may be understood as low molecular weight resin being dissolved. Curing behavior was similar, but gel-time was slightly increased, which may be understood as a decrease in the number of functional groups capable of curing per unit weight due to a decrease in low molecular weight components.

Meanwhile, in the resin prepared according to Comparative Example 1, in the case of DMAP, preparation was possible at a sufficiently low level, but methacrylic acid was detected at a considerably high level of about 2,500 ppm. This may be understood as polar impurities being co-precipitated inside long molecular chains due to crystallization in a high viscosity state and not being well dissolved. In addition, a very small amount of methacrylic anhydride was detected in a product in a wet cake state before drying, but was not detected after drying. This may be understood as being removed by volatilization at a high drying temperature while remaining in a small amount due to omission of a quenching process by the viscosity reducing agent.

The resin prepared according to Comparative Example 2 showed that methacrylic acid was detected in a considerably larger amount of 2,844 ppm compared to Example 1. When crystallization is not performed in two processes, a process of growing crystals is omitted and crystals are precipitated at once, so that a probability of co-precipitation is relatively high, and as a result, methacrylic acid is not sufficiently removed.

The resin prepared according to Comparative Example 3 showed that a large amount of methacrylic acid and DMAP remained because washing was not performed. Gel-time was similar, but showed curing behavior different from Example 1. This is presumed to be due to a large amount of methacrylic acid. In addition, the worst adhesion was shown in the adhesion test (peeling test), which is also presumed to be due to a large amount of methacrylic acid.

The resin prepared according to Comparative Example 4 was for comparing results of a purification method, and purification was performed through a work-up (washing method). However, during phase separation, a large amount of emulsion was generated, so that a phase separation time was very long, and yield was significantly reduced in a process of removing an emulsion layer. In addition, since a phase separation state is not good, a large amount of methacrylic acid and DMAP remained.

The resin prepared according to Comparative Example 5 had a decrease in yield due to an increase in solubility by a crystallization method using toluene/IPA, and a considerable amount of impurities remained due to co-precipitation. In addition, a small amount of MAAH was detected, which appears to be because reactivity of IPA is lower than that of methanol.

In this specification, desirable embodiments of the present disclosure have been disclosed, and although specific terms have been used, these are used only in a general sense to easily explain the technical content of the present disclosure and to help understanding of the disclosure, and are not intended to limit the scope of the present disclosure. In addition to the embodiments disclosed herein, it is apparent to a person of ordinary skill in the art that other modified examples based on the technical idea of the present disclosure may be implemented. For example, a person of ordinary skill in the art will appreciate that the method for preparing capped poly(phenylene oxide) according to the embodiments may be variously modified. Accordingly, the scope of the disclosure should not be defined by the described embodiments but should be defined by the technical idea described in the claims.

## Claims

1. A method for preparing a capped poly(phenylene oxide), the method comprising:
(S10) preparing a first reactant by introducing poly(phenylene oxide) and a catalyst into a first solvent, and dissolving the poly(phenylene oxide) in the first solvent;
(S20) heating a second reactant, in which an anhydride capping agent is introduced into the first reactant, to a boiling point, followed by stirring at a reflux temperature;
(S30) introducing a viscosity reducing agent into a result of process (S20), followed by stirring;
(S40) adding dropwise the result of process (S30) into a second solvent while stirring for first crystallization; and
(S50) adding dropwise a third solvent into a result of process (S40) while stirring for second crystallization.

2. The method of claim 1,
wherein the capped poly(phenylene oxide) represents a structure of Formula 1:
[Formula 1] Y(B-A)ₓ
(wherein in Formula 1, Y is a residue of a monovalent, divalent, or polyvalent phenol;
B comprises a repeating unit of the following Formula 2;
A is a capping group prepared by a reaction of the anhydride capping agent with a free phenolic hydroxyl group on the poly(phenylene oxide);
x is 1 to 100) 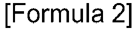 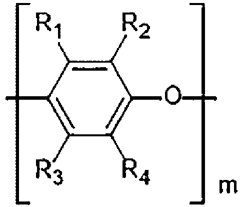
(wherein in Formula 2, m is 1 to 200;
R₁ and R₃ are each independently selected from the group consisting of hydrogen, halogen, primary or secondary C1-C12 alkyl, C2-C12 alkenyl,
C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom);
R₂ and R₄ are each independently selected from the group consisting of halogen, primary or secondary C1-C12 alkyl, C2-C12 alkenyl, C2-C12 alkynyl, C1-C12 aminoalkyl, C1-C12 hydroxyalkyl, phenyl, C1-C12 haloalkyl, C1-C12 hydrocarbyloxy, and C2-C12 halohydrocarbyloxy (wherein at least two carbon atoms separate a halogen atom and an oxygen atom)).

3. The method of claim 2,
wherein A represents a structure of any one of Formula 3 to Formula 5: 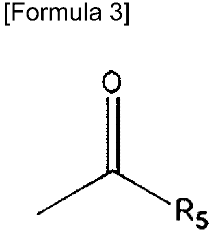
(wherein in Formula 3, R₅ is C1-C12 hydrocarbyl optionally substituted with one or two carboxylic acid groups) 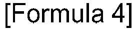 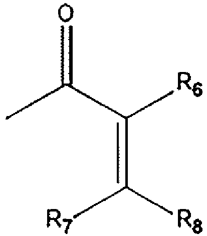
(wherein in Formula 4, R₆ to R₈ are each independently selected from the group consisting of hydrogen, C1-C18 hydrocarbyl optionally substituted with hydrogen and one or two carboxylic acid groups, C2-C18 hydrocarbyloxycarbonyl, nitrile, formyl, carboxylic acid, imidate, and thiocarboxylic acid) 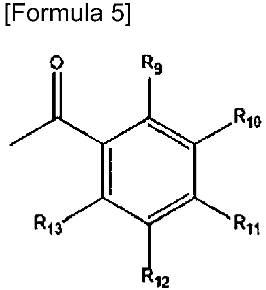
(wherein in Formula 5, R₉ to R₁₃ are each independently selected from the group consisting of hydrogen, halogen, C1-C12 alkyl, hydroxy, amino, and carboxylic acid).

4. The method of claim 2,
wherein Y represents a structure of Formula 6: 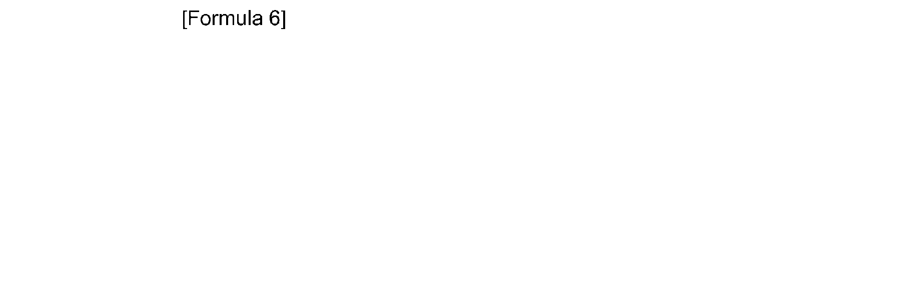 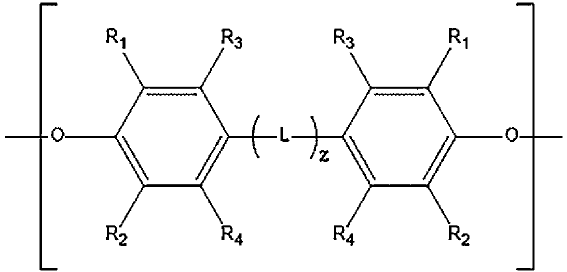
(wherein in Formula 6, L represents a structure of any one of Formula 7 to Formula 13;
z is 0 or 1;
R₁ to R₄ are each independently selected from the group consisting of hydrogen, halogen, and substituted C1-C12 hydrocarbyl)
[Formula 7] -O- 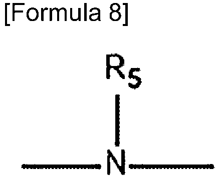
(wherein in Formula 8, R₅ is selected from the group consisting of hydrogen and C1-C12 hydrocarbyl) 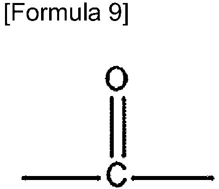 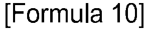 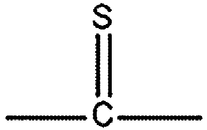 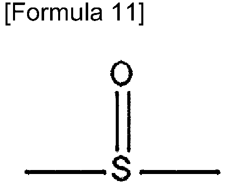 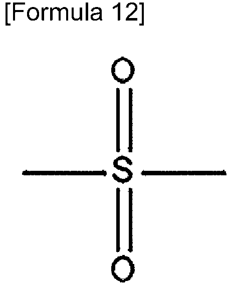 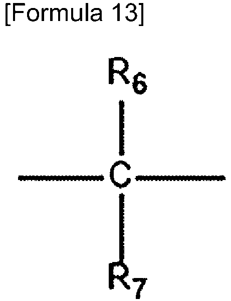
(wherein in Formula 13, R₆ and R₇ are each independently selected from the group consisting of hydrogen, C1-C12 hydrocarbyl, and C1-C6 hydrocarbylene).

5. The method of claim 1,
wherein the first solvent is an aprotic solvent.

6. The method of claim 5,
wherein the aprotic solvent comprises any one selected from the group consisting of ethyl acetate, propylene glycol methyl ether acetate, methyl ethyl ketone, methyl isobutyl ketone, and benzyl phenyl ketone, or a mixture of two or more thereof.

7. The method of claim 1,
wherein the anhydride capping agent represents a structure of Formula 14: 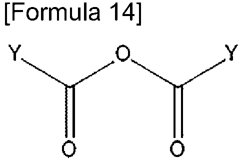
(wherein in Formula 14, Y(s) each independently represent a structure of any one of Formula 15 to Formula 17)
[Formula 15] -R₅
(wherein in Formula 15, Rs is C1-C12 hydrocarbyl optionally substituted with one or two carboxylic acid groups) 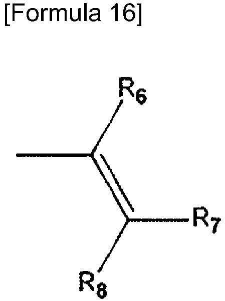
(wherein in Formula 16, R₆ to R₈ are each independently selected from the group consisting of hydrogen, C1-C18 hydrocarbyl optionally substituted with one or two carboxylic acid groups, C2-C18 hydrocarbyloxycarbonyl, nitrile, formyl, carboxylic acid, imidate, and thiocarboxylic acid) 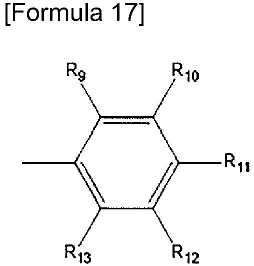
(wherein in Formula 17, R₉ to R₁₃ are each independently selected from the group consisting of hydrogen, halogen, C1-C12 alkyl, hydroxy, amino, and carboxylic acid).

8. The method of claim 1,
wherein the anhydride capping agent comprises any one selected from the group consisting of acetic anhydride, succinic anhydride, maleic anhydride, salicylic anhydride, phthalic anhydride, acrylic anhydride, and methacrylic anhydride, or a mixture of two or more thereof.

9. The method of claim 1,
wherein an amount of the anhydride capping agent is 10 to 50 parts by weight based on 100 parts by weight of the poly(phenylene oxide).

10. The method of claim 1,
wherein the viscosity reducing agent comprises any one selected from the group consisting of C1-C4 alkanols, or a mixture of two or more thereof.

11. The method of claim 1,
wherein an amount of the viscosity reducing agent is 1 to 30 parts by weight based on 100 parts by weight of the poly(phenylene oxide).

12. The method of claim 1,
wherein the second solvent and the third solvent each independently comprise any one selected from the group consisting of C1-C4 alkanols, or a mixture of two or more thereof.

13. The method of claim 1,
wherein amounts of the second solvent and the third solvent are each independently 200 to 400 parts by weight based on 100 parts by weight of the poly(phenylene oxide).

14. The method of claim 1,
further comprising, after process (S50):
(S60) filtering a result of process (S50) to obtain a solid product, and washing the solid product with a washing solution.

15. The method of claim 14,
wherein the washing solution comprises alkanol and water.

16. The method of claim 15,
wherein the washing solution comprises 1 to 30 parts by weight of the water based on 100 parts by weight of the alkanol.

17. The method of claim 14,
further comprising, after process (S60):
(S70) drying the solid product at a temperature of 80 to 100 °C to remove a residual solvent.
